# EUROPÄISCHE PATENTSCHRIFT

(11) **EP 3 795 351 B1**
(45) Veröffentlichungstag und Bekanntmachung des Hinweises auf die Patenterteilung: **27.11.2024**
(21) Anmeldenummer: 20192731.6
(22) Anmeldetag: 25.08.2020
(51) Int. Cl.: B32B 25/10, F16F 9/04, B32B 25/14, B32B 25/16, B32B 25/18, B29D 22/02, B32B 7/08

(54) **SCHICHTAUFBAU AUS WENIGSTENS EINEM ELASTOMEREN MATERIAL MIT DARIN EINGEBETTETEN FASERN, VERFAHREN ZUR HERSTELLUNG DES SCHICHTAUFBAUS SOWIE LUFTFEDERBALG MIT EINEM SOLCHEN SCHICHTAUFBAU**
LAYERED STRUCTURE OF AT LEAST ONE ELASTOMERIC MATERIAL WITH FIBRES EMBEDDED IN THE MATERIAL, METHOD FOR PRODUCING THE LAYERED STRUCTURE AND AIR SPRING BELLOWS WITH SUCH A LAYERED STRUCTURE
STRUCTURE EN COUCHES COMPOSÉE D'AU MOINS UNE MATIÈRE ÉLASTOMÈRE COMPORTANT DES FIBRES INTÉGRÉES DANS CELLE-CI, PROCÉDÉ DE FABRICATION DE LA STRUCTURE EN COUCHES AINSI QUE SOUFFLET PNEUMATIQUE DOTÉ D'UNE TELLE STRUCTURE EN COUCHES

(30) Priorität: 23.09.2019 DE 102019214454
(43) Veröffentlichungstag der Anmeldung: 24.03.2021
(73) Patentinhaber: ContiTech Deutschland GmbH, 30175 Hannover (DE)
(72) Erfinder: Stahmer, Reinhard, 30419 Hannover (DE); Reck, Siegfried, 30419 Hannover (DE); Mahnken, Claus-Lüder, 30419 Hannover (DE)
(74) Vertreter: Continental Corporation

(56) Entgegenhaltungen:
- EP-A1- 0 510 417
- DE-A1- 102008 015 610
- DE-A1- 102014 219 613
- DE-A1- 102015 202 289
- US-A- 3 897 941
- US-A- 5 566 929

## Beschreibung

Die Erfindung betrifft einen Schichtaufbau aus wenigstens einem elastomeren Material mit darin eingebetteten Fasern, beispielsweise für die Herstellung eines Luftfederbalgs einer Luftfeder, mit mindestens zwei Gewebelagen und zwei Deckschichten, bei dem die erste Gewebelage mit der zweiten Gewebelage sowie mit der Innenseite der ersten Deckschicht verbunden ist, und bei dem die zweite Gewebelage mit der Innenseite der zweiten Deckschicht verbunden ist, wobei die erste Gewebelage mit einem in ein elastomeres Material eingebetteten ersten Traggewebe und die zweite Gewebelage mit einem in dasselbe elastomere Material oder in ein anderes elastomeres Material eingebetteten zweiten Traggewebe gebildet ist. Die Erfindung betrifft zudem ein Verfahren zur Herstellung eines solchen Schichtaufbaus. Außerdem betrifft die Erfindung einen Luftfederbalg sowie eine Luftfeder mit einem solchen Luftfederbalg, beispielsweise für ein Kraftfahrzeug, der einen Schichtaufbau aus wenigstens einem elastomeren Material mit darin eingebetteten Fasern aufweist.

Luftfedern kommen bei Schienenfahrzeugen, industriellen Anwendungen, Nutzfahrzeugen sowie Personenkraftwagen zum Einsatz, da mit diesen ein sensibles Ansprechverhalten mit einem hohen Federungskomfort realisierbar ist. Darüber hinaus kann mittels einer Luftfederung eine Fahrzeughöhe belastungsabhängig eingestellt werden. Mittels einer flexibel einstellbaren Luftfederung kann außerdem die Fahrzeughöhe an ein vorgegebenes Niveau einer Ladekante und an eine maximale Unterfahrhöhe eines Bauwerks, wie einer Brücke oder dergleichen, angepasst werden. Zudem sind Luftfedern an Fahrzeugsitzen, pneumatischen Hebevorrichtungen oder als Schwingungsisolatoren im Maschinenbau bekannt.

Luftfedern weisen einen schlauchartigen, ein- oder mehrfaltigen elastomeren Balg auf, dessen axiale Enden beispielsweise jeweils mit einer Endplatte zur Umgrenzung eines druckdichten Innenraums verbunden sind. Der Balg einer Luftfeder ist üblicherweise unter Verwendung eines gummierten Cordgewebes hergestellt, welches sich kreuzende Schuss- und Kettfäden aufweist. Dieses Cordgewebe ist vollständig in ein matrixbildendes Elastomer eingebettet beziehungsweise von diesem umschlossen. Mittels chemischer Haftvermittler wird der notwendige Haftverbund zwischen dem Cordgewebe beziehungsweise dessen Gummierung und dem matrixbildenden Elastomer erreicht. Als matrixbildende Elastomere kommen vielfach Chloropren-Kautschuk (CR) oder eine Kombination aus einem Naturkautschuk (NR) und einem Butadien-Kautschuk beziehungsweise Polybutadien (BR) zum Einsatz. Die Innenauskleidung bekannter Luftfederbälge ist unter Verwendung eines CR-Kautschuks oder einer Kombination aus einem NR-Kautschuk und einem BR-Kautschuk aufgebaut, welche zwar gut an dem gummierten Cordgewebe des Luftfederbalgs haften, aber nur eine durchschnittliche Diffusionskonstante aufweisen und daher pneumatisch nicht stark abdichtend sind. Das Dokument US 3 897 941 A offenbart einen Schichtaufbau aus einem elastomeren Material mit darin eingebetteten Fasern.

Der Erfindung lag daher die Aufgabe zugrunde, einen Schichtaufbau vorzustellen, welcher aufgrund seiner Materialeigenschaften pneumatisch stark abdichtend wirkt sowie eine lange Gebrauchsdauer ermöglicht. Ein solcher Schichtaufbau soll zur Herstellung eines Luftfederbalgs geeignet sein. Daher sollte auch ein Luftfederbalg sowie eine Luftfeder vorgestellt werden, welche mit einem derartigen Luftfederbalg ausgestattet ist.

Die Lösung dieser Aufgabe wird zunächst mit einem Schichtaufbau erreicht, welcher die Merkmale des Anspruchs 1 aufweist. Vorteilhafte Weiterbildungen dieses Schichtaufbaus sind in den abhängigen Ansprüchen definiert. Ein die Aufgabe lösender Luftfederbalg sowie eine diesbezügliche Luftfeder sind in den Ansprüchen 12 beziehungsweise 13 darlegt. Die Erfindung betrifft demnach zunächst einen Schichtaufbau aus wenigstens einem elastomeren Material mit darin eingebetteten Fasern, beispielsweise für die Herstellung eines Luftfederbalgs einer Luftfeder, mit mindestens zwei Gewebelagen und zwei Deckschichten, bei dem die erste Gewebelage mit der zweiten Gewebelage sowie mit der Innenseite der ersten Deckschicht verbunden ist, und bei dem die zweite Gewebelage mit der Innenseite der zweiten Deckschicht verbunden ist, wobei die erste Gewebelage mit einem in ein elastomeres Material eingebetteten ersten Traggewebe und die zweite Gewebelage mit einem in dasselbe elastomere Material oder in ein anderes elastomeres Material eingebetteten zweiten Traggewebe gebildet ist.

Zur Lösung der diesbezüglich gestellten Aufgabe ist vorgesehen, dass die zweite Deckschicht eine Dichtlage sowie eine Haftvermittlungslage aufweist, zwischen denen eine textile Verbindungslage zur gegenseitigen mechanischen Verkrallung von Dichtlage und Haftvermittlungslage angeordnet ist, wobei die Dichtlage aus einem weitestgehend diffusionsdichten elastomeren Material und die Haftvermittlungslage aus einem hochgradig adhäsiven sowie gut an der zweiten Gewebelage anhaftenden elastomeren Material gebildet ist.

Ein elastomeres Zwischenprodukt, welches einen solchen Schichtaufbau aufweist, ist hervorragend für die Herstellung eines Luftfederbalgs einer Luftfeder geeignet. Dieses Zwischenprodukt dient dabei als Wandung des Luftfederbalgs. Durch die Verwendung eines solchen Luftfederbalgs können Luftverluste einer Luftfeder beträchtlich vermindert und zugleich die Haltbarkeit des Luftfederbalgs erhöht werden. Außerdem wird eine sauerstoffbedingte und ozonbedingte Alterung des Luftfederbalgs reduziert.

Ein weiterer Vorteil besteht darin, dass die Materialstärke der Dichtlage aufgrund deren ausgezeichneten Dichtwirkung vergleichsweise gering sein kann, wodurch auftretende Verformungsbelastungen klein gehalten werden und im Ergebnis die mögliche Gebrauchsdauer des Luftfederbalgs im Vergleich zu konventionellen Luftfederbälgen erheblich verlängert ist.

Außerdem kann der Einsatz von chemischen Haftvermittlern, wie Klebstoffen, Lösemitteln und Gummilösung, aufgrund der genannten mechanischen Verkrallung an der textilen Verbindungslage entfallen. Durch diese mechanische Verkrallung beziehungsweise flächige Verzahnung ergibt sich eine hervorragende Verbindung zwischen der Dichtlage und der Haftvermittlungslage, sodass die Verbindung besonders hinsichtlich dynamischer Belastungen, wie sie im Betrieb von Luftfedern auftreten, besonders widerstandsfähig ist.

Neben der Verwendung des erfindungsgemäßen Schichtaufbaus zur Herstellung von Luftfederbälgen kann dieser Schichtaufbau auch als Vorprodukt oder Zwischenprodukt zur Herstellung von Schläuchen, Pumpenmembranen, Ventilen oder dergleichen genutzt werden.

Die textile Verbindungslage kann als ein Mono-Gewebe oder als ein Bistretch-Gewebe ausgeführt sein. Bei einem Mono-Gewebe sind elastische Fäden in nur einer Richtung angeordnet, während bei einem Bistretch-Gewebe elastische Fäden in zwei unterschiedliche Richtungen verlaufen.

Gemäß einer vorteilhaften Ausgestaltung des erfindungsgemäßen Schichtaufbaus ist vorgesehen, dass die Dichtlage mit oder ausschließlich aus einem Butyl-Elastomer gebildet ist. Durch das pneumatisch hochdichtende Butyl-Elastomer beziehungsweise den Butylkautschuk oder den Isobuten-Isopren-Kautschuk ist eine maximale Diffusionsdichtigkeit des Schichtaufbaus an sich gewährleistet.

Eine andere günstige Ausgestaltung des Schichtaufbaus sieht vor, dass die Haftvermittlungslage mit oder ausschließlich aus einem Chloropren-Elastomer gebildet ist. Hierdurch ist im Zusammenwirken mit der textilen Verbindungslage eine mechanisch belastbare und haltbare Fügung zwischen der zweiten Deckschicht und den innenliegenden Gewebelagen bei einer zugleich ausgezeichneten Abdichtwirkung gewährleistet.

Weiter kann vorgesehen sein, dass die Haftvermittlungslage mit oder ausschließlich aus einem Naturkautschuk-Elastomer und mit oder ausschließlich aus einem Butadien-Elastomer gebildet ist. Hierdurch ist ein hervorragender mechanischer Verbund zwischen der zweiten Deckschicht und der zweiten Gewebelage des Schichtaufbaus sichergestellt.

Es kann mit Vorteil aber auch vorgesehen sein, dass die Haftvermittlungslage mit einem EPDM-Elastomer (EPDM: Ethylen-Propylen-Dien-Kautschuk) oder ausschließlich aus einem EPDM-Elastomer gebildet ist.

Die erste, vorzugsweise äußere Deckschicht weist eine Materialstärke von beispielsweise 0,8 mm bis 1,5 mm auf. Hierdurch ist ein optimaler mechanischer Schutz des Schichtaufbaus vor mechanischem Abrieb und schädlichen Umgebungseinflüssen, wie Steinschlag und Witterungseinflüssen in Form von UV-Strahlung, Ozonbelastung sowie hohen Temperatur- und Feuchtigkeitsschwankungen gegeben.

Die zweite, vorzugsweise innere Deckschicht weist eine Materialstärke von beispielsweise 1,0 mm bis 1,5 mm auf. Infolge der im Vergleich zu bekannten Schichtaufbauten, beispielsweise von Luftfederbälgen, signifikant reduzierten Dicke der inneren Deckschicht ist eine lange Gebrauchsdauer eines mit diesem Schichtaufbau realisierten Luftfederbalgs einer Luftfeder möglich. Aufgrund des hochdichtenden Butyl-Elastomers der Dichtlage ergeben sich zudem lediglich minimale Luftverluste und in deren Folge nur sehr geringe Druckverluste eines mit einem erfindungsgemäßen Schichtaufbau gebildeten Luftfederbalgs einer Luftfeder.

Weiter wird vorgeschlagen, dass die beiden Traggewebe jeweils als gekreuzte Cordgewebe ausgeführt sind. Hierdurch ist eine hohe Belastungsfähigkeit gegenüber aus unterschiedlicher Richtung angreifenden mechanischen Lasten gegeben.

Bevorzugt weisen die mindestens zwei Gewebelagen jeweils eine Materialstärke von 0,9 mm bis 1,2 mm auf. Hierdurch ist eine hinreichend hohe mechanische Belastbarkeit der beiden Gewebelagen des Schichtaufbaus erreicht.

Schließlich wird es als vorteilhaft beurteilt, wenn bei dem erfindungsgemäßen Schichtaufbau vorgesehen ist, dass die erste Deckschicht aus einem Chloropren-Elastomer oder einem Naturkautschuk-Elastomer oder einem Butadien-Elastomer oder einem EPDM-Elastomer gebildet ist.

Die Erfindung betrifft wie erwähnt auch einen Luftfederbalg. Zur Lösung der den

Luftfederbalg betreffenden, eingangs genannten Aufgabe ist vorgesehen, dass die Wand des Luftfederbalgs einen Schichtaufbau aus wenigstens einem elastomeren Material mit darin eingebetteten Fasern aufweist, welcher die gerade vorgestellten Merkmale von wenigstens einem der den Schichtaufbau betreffenden Ansprüche hat.

Schließlich wird die eingangs genannte, eine Luftfeder betreffende Aufgabe durch eine Luftfeder mit den Merkmalen des Anspruchs 13 4+ gelöst. Diese Luftfeder weist einen schlauchartigen Luftfederbalg auf, dessen Wand einen Schichtaufbau aus wenigstens einem elastomeren Material mit darin eingebetteten Fasern hat. Dieser Schichtaufbau ist gemäß den Merkmalen von wenigstens einem der Ansprüche 1 bis 11 bis 9 ausgebildet. Zudem ist vorgesehen, dass der die Wand des Luftfederbalgs bildende Schichtaufbau des Luftfederbalgs derartig orientiert ist, dass dessen erste Deckschicht der äußeren Umgebung des Luftfederbalgs und dessen zweite Deckschicht dem Innenraum des Luftfederbalgs zugewandt ist. Die solchermaßen hergestellte Luftfeder erreicht im Vergleich mit bekannten Luftfedern eine signifikant verlängerte Gebrauchsdauer bei zugleich minimalen Luftverlusten.

Durch die beschriebene Orientierung des Schichtaufbaus bei der Herstellung des Luftfederbalgs sind die unterschiedliche Eigenschaften aufweisenden Deckschichten des Schichtaufbaus optimal für den Einsatz als Luftfederbalg einer Luftfeder ausgerichtet. So bildet die mechanisch besonders robuste erste Deckschicht des Schichtaufbaus die nachteiligen Umwelteinflüssen ausgesetzte äußere Deckschicht des Luftfederbalgs der Luftfeder, während die praktisch vollständig diffusionsdichte zweite Deckschicht die innere Deckschicht zur Vermeidung von Luftverlusten bei einer zugleich erreichbaren Gebrauchsdauerverlängerung des Luftfederbalgs bildet.

Die Erfindung betrifft auch ein Verfahren zur Herstellung eines Schichtaufbaus mit zumindest einem Teil der oben beschriebenen Schichtaufbau-Merkmale. Hierbei ist vorgesehen, dass der Schichtaufbau in einer automatischen Matten-Vulkanisierungsvorrichtung erzeugt wird. In einer solchen automatischen Matten-Vulkanisierungsvorrichtung werden die einzelnen Bestandteile des Schichtaufbaus übereinander angeordnet, miteinander laminiert und dann unter Vulkanisations-Druck und Vulkanisations-Temperatur miteinander verbunden. Die Herstellung eines erfindungsgemäßen Schichtaufbaus ist jedoch auch durch ein manuelles aufeinander Laminieren der einzelnen Schichten des Schichtaufbaus möglich.

Zur weiteren Erläuterung der Erfindung ist der Beschreibung eine Zeichnung beigefügt. In dieser Zeichnung zeigt
Fig. 1 eine teilweise aufgeschnitten dargestellte Luftfeder mit einem erfindungsgemäßen Schichtaufbau eines Luftfederbalgs, und
Fig. 2 eine vergrößerte schematische Darstellung des Schichtaufbaus des Luftfederbalgs der Luftfeder gemäß Fig. 1.

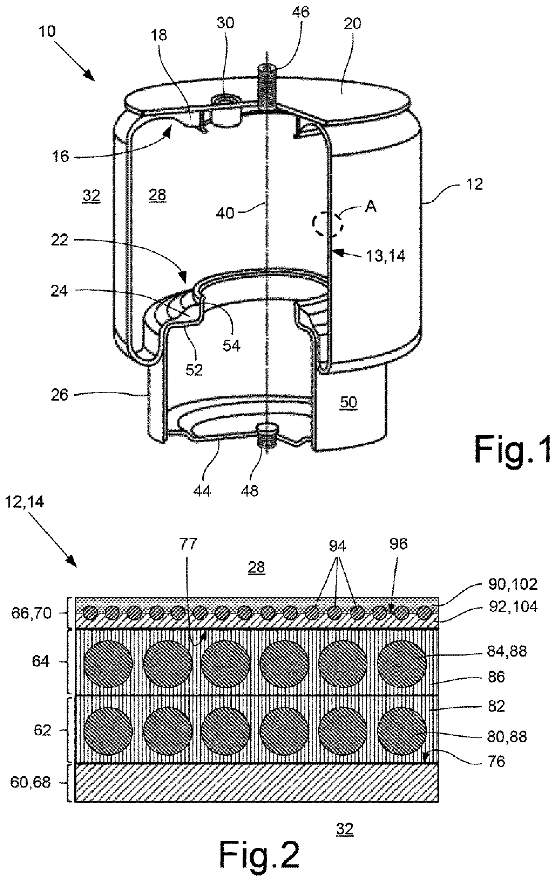

Die Luftfeder 10 gemäß Fig. 1 weist einen schlauchartigen Luftfederbalg 12 auf, der aus einem faserarmierten elastomerem Kunststoffmaterial hergestellt ist. Die Wand 13 des Luftfederbalgs 12 hat einen erfindungsgemäßen, in Fig. 1 nicht im Detail erkennbaren Schichtaufbau 14, welcher noch anhand der Fig. 2 detailliert erläutert wird.

An einem ersten axialen Ende 16 des Luftfederbalgs 12 ist radial innen ein erster Wulst 18 ausgeformt, der mit einer scheibenförmigen ersten Endplatte 20 dichtend verbunden ist. Dementsprechend ist an einem zweiten axialen Ende 22 des Luftfederbalgs 12 radial innen ein zweiter Wulst 24 ausgebildet, welcher an einem im Wesentlichen topfförmigen Stützkolben 26 gleichfalls druckdicht befestigt ist, sodass ein in sich abgeschlossener Innenraum 28 der Luftfeder 10 umgrenzt ist. Der Innenraum 28 der Luftfeder 10 ist mittels eines pneumatischen Anschlusses 30 über eine nicht dargestellte Druckluftleitung mit Druckluft einer externen Druckluftquelle beaufschlagbar. Durch den Luftfederbalg 12 ist der Innenraum 28 von einer äußeren Umgebung 32 der Luftfeder 10 separiert. Die Luftfeder 10 mit dem Luftfederbalg 12 ist näherungsweise rotationssymmetrisch zu einer Längsmittelachse 40 aufgebaut.

Die erste Endplatte 20 verfügt ferner über ein bolzenartiges Befestigungselement 46. Ein kreisrunder Boden 44 des Stützkolbens 26 weist ebenfalls ein bolzenartiges Befestigungselement 48 auf. Mithilfe der beiden Befestigungselemente 46, 48 kann die Luftfeder 10 zum Beispiel mit einem Chassis und einer in Relation zu diesem beweglichen Fahrwerkskomponente, wie einem Achsschenkel eines nicht dargestellten Kraftfahrzeugs, verbunden werden.

Bei Einfederungsbewegungen und Ausfederungsbewegungen der ersten Endplatte 20 in Richtung zum Stützkolben 26 sowie in der hierzu entgegengesetzten Richtung rollt der Luftfederbalg 12 entlang einer im Wesentlichen zylindrischen Außenwand 50 des Stützkolbens 26 ab. An die Außenwand 50 des Stützkolbens 26 schließt sich eine radial einwärts gerichtete Schulter 52 an, welche in einen hohlzylindrischen und hierbei koaxial verlaufenden Fortsatz 54 übergeht. Der Fortsatz 54 weist in Richtung zur ersten Endplatte 20. Durch die Schulter 52 und den Fortsatz 54 ist eine mechanisch zuverlässige Lagesicherung des zweiten Wulstes 24 des Luftfederbalgs 12 an dem Stützkolben 26 der Luftfeder 10 gegeben.

Im Übrigen sind der konstruktive Aufbau sowie die Funktion der Luftfeder 10 einem auf dem Gebiet der pneumatischen Federungstechnik von Kraftfahrzeugen tätigen Fachmann hinreichend geläufig, sodass auf eine eingehendere Beschreibung verzichtet werden kann.

Die Fig. 2 zeigt eine vergrößerte schematische Darstellung des Ausschnitts A des Luftfederbalgs 12 der Luftfeder 10 gemäß Fig. 1. Der mit wenigstens einem elastomeren Material mit darin eingebetteten Fasern gebildete Schichtaufbau 14 des Luftfederbalgs 12 weist eine erste Deckschicht 60, eine erste Gewebelage 62, eine zweite Gewebelage 64 sowie eine zweite Deckschicht 66 auf. Die erste Gewebelage 62 ist mit einer Innenseite 76 der ersten Deckschicht 60 verbunden, und die zweite Gewebelage 64 ist mit der ersten Gewebelage 62 sowie mit der Innenseite 77 der zweiten Deckschicht 66 zur Schaffung des Schichtaufbaus 14 des Luftfederbalgs 12 verbunden. Die Verbindungen zwischen den einzelnen Schichten können zum Beispiel durch Vulkanisieren realisiert sein.

Die Außenseite der ersten Deckschicht 60 des Schichtaufbaus 14 ist der äußeren Umgebung 32 des Luftfederbalgs 12 zugewandt, während die Außenseite der zweiten Deckschicht 66 dem Innenraum 28 des Luftfederbalgs 12 der hier nicht dargestellten Luftfeder 10 zugewandt ist. Somit stellt die erste Deckschicht 60 des Schichtaufbaus 14 hier exemplarisch eine äußere Deckschicht 68 dar, und die zweite Deckschicht 66 des Schichtaufbaus 14 bildet eine innere Deckschicht 70.

Dieser Schichtaufbau 14 kann bei der Herstellung von elastomeren Hohlkörpern jeder Art, wie zum Beispiel Luftfederbälgen, Schläuchen, Kompensatoren oder Reifen, zum Einsatz kommen.

Die zweite Deckschicht 66 weist außen eine Dichtlage 90 und innen eine Haftvermittlungslage 92 auf, zwischen denen eine textile Verbindungslage 94 zur mechanischen Verkrallung von Dichtlage 90 und Haftvermittlungslage 92 unter Schaffung einer Grenzschicht 96 verläuft. Die Grenzschicht 96 verläuft hier lediglich exemplarisch näherungsweise mittig innerhalb der zweiten Deckschicht 66. Die Haftvermittlungslage 92 und die textile Verbindungslage 94 können aber auch unterschiedliche Dicken aufweisen.

Die Dichtlage 90 ist aus einem weitestgehend diffusionsdichten elastomeren Material 102 gebildet, und die Haftvermittlungslage 92 ist aus einem hochgradig adhäsiven sowie hierdurch gut an der zweiten Gewebelage 64 anhaftenden elastomeren Material 104 gebildet.

Bei dem hochgradig diffusionsdichten elastomeren Material der Dichtlage 90 wird bevorzugt ein nahezu diffusionsdichter Butyl-Elastomer beziehungsweise Butyl-Kautschuk oder Isobuten-Isopren-Kautschuk verwendet, wodurch sich die Luftverluste des Luftfederbalgs 12 praktisch vernachlässigen lassen. Bei dem adhäsiven elastomeren Material 104 der Haftvermittlungslage 92 kommt hingegen bevorzugt ein Chloropren-Elastomer (CR) zum Einsatz, wodurch eine ausgezeichnete Verbindungsgüte mit der zweiten Gewebelage 64 gewährleistet ist. Alternativ dazu kann die Haftvermittlungslage 92 auch aus einem Naturkautschuk-Elastomer (NR) in Verbindung mit einem Butadien-Elastomer (BR) bestehen, welches zu vergleichbaren Haftungsergebnissen führt. Zur Bildung der Haftvermittlungslage 92 kann auch Ethylen-Propylen-Dien-Kautschuk (EPDM) oder ein EPDM-Gemisch genutzt werden, beispielsweise ein Gemisch aus EPDM und einem Naturkautschuk-Elastomer (NR) und einem Butadien-Elastomer (BR).

Die erste Gewebelage 62 ist mit einem ersten Traggewebe 80 aufgebaut, welches in ein elastomeres Material 82, wie beispielsweise ein Chloropren-Elastomer (CR), ein Naturkautschuk-Elastomer (NR) oder ein Butadien-Elastomer (BR) eingebettet beziehungsweise von diesem Elastomer vollständig infiltriert ist. Die zweite Gewebelage 64 ist mit einem zweiten Traggewebe 84 aufgebaut, das gleichfalls mit einem elastomeren Material 86 infiltriert ist. Die beiden elastomeren Materialien 82, 86 im Bereich der beiden Gewebelagen 62, 64 sind bevorzugt identisch, sie können erforderlichenfalls aber auch aus unterschiedlichen elastomeren Materialen gebildet sein.

Die erste Deckschicht 60 beziehungsweise die äußere Deckschicht 68 ist faserfrei beziehungsweise armierungsfrei und bevorzugt aus demselben elastomeren Material 104 wie die Haftvermittlungslage 92 gebildet, also aus einem Chloropren-Elastomer (CR) oder einem Naturkautschuk-Elastomer (NR) oder einem Butadien-Elastomer (BR) oder einem EPDM oder einem EPDM-Gemisch.

Die Traggewebe 80, 84 in den beiden Gewebelagen 62, 64 sind zur Erzielung einer möglichst hohen mechanischen Belastbarkeit bevorzugt jeweils als Cordgewebe 88 mit sich unter geeigneten Winkeln kreuzenden Kettfäden und nicht dargestellten Schussfäden ausgeführt.

Für den Fall, dass der erfindungsgemäße Schichtaufbau 14 zur Herstellung eines Luftfederbalgs 12 für eine Luftfeder 10 vorgesehen ist, liegt eine Materialstärke der ersten Deckschicht 60 beziehungsweise der äußeren Deckschicht 68 vorzugsweise in einem Bereich zwischen 0,8 mm und 1,5 mm. Die Materialstärke der zweiten Deckschicht 66 beziehungsweise der inneren Deckschicht 70 beträgt bevorzugt 1,0 bis 1,5 mm. Die beiden im Inneren des Schichtaufbaus 14, das heißt parallel zwischen den beiden Deckschichten 60, 66 verlaufenden Gewebelagen 62, 64 weisen jeweils bevorzugt eine Dicke zwischen 0,9 und 1,2 mm auf.

Aufgrund der rein textilen Verbindungslage 94, welche sich sowohl in die Dichtlage 90 als auch in die Haftvermittlungslage 92 hinein erstreckt und dadurch mit diesen jeweils innig mechanisch verkrallt ist, ist ein hochzuverlässiger Haftungsverbund zwischen der Dichtlage 90, der Haftvermittlungslage 92 und der zweiten Gewebelage 64 realisiert. Ein solch guter Haftungsverbund wäre aufgrund von Haftungsinkompatibilitäten des Elastomers 82, 86 der beiden Gewebelagen 62, 64 mit dem Elastomer 102 der Dichtlage 90 mit deren Materialien alleine nicht erreichbar.

Durch die hervorragende Diffusionsdichtigkeit der mit oder ausschließlich aus einem Butyl-Kautschuk aufgebauten Dichtlage 90 kann deren Materialstärke in Vergleich zu bekannten Ausführungsformen sehr gering sein. Infolgedessen reduzieren sich Verformungseffekte, wie zum Beispiel bei Stauchungen des Schichtaufbaus bei Ein- und Ausfederbewegungen, sodass die schadlose Gebrauchsdauer eines derart hergestellten Luftfederbalgs 12 signifikant verlängert ist.

### Bezugszeichenliste

- 10: Luftfeder
- 12: Luftfederbalg
- 13: Wand des Luftfederbalgs
- 14: Schichtaufbau
- 16: Erstes axiales Ende der Luftfederbalg
- 18: Erster Wulst
- 20: Endplatte
- 22: Zweites axiales Ende der Luftfederbalg
- 24: Zweiter Wulst
- 26: Stützkolben der Luftfeder
- 28: Innenraum der Luftfeder
- 30: Pneumatischer Anschluss
- 32: Äußere Umgebung der Luftfeder
- 40: Längsmittelachse der Luftfeder
- 44: Boden des Stützkolbens
- 46: Erstes Befestigungselement
- 48: Zweites Befestigungselement
- 50: Außenwand des Stützkolbens
- 52: Schulter des Stützkolbens
- 54: Fortsatz am Stützkolben
- 60: Erste Deckschicht
- 62: Erste Gewebelage
- 64: Zweite Gewebelage
- 66: Zweite Deckschicht
- 68: Äußere Deckschicht
- 70: Innere Deckschicht
- 76: Innenseite der ersten Deckschicht
- 77: Innenseite der zweiten Deckschicht
- 80: Erstes Traggewebe
- 82: Elastomeres Material
- 84: Zweites Traggewebe
- 86: Elastomeres Material
- 88: Cordgewebe
- 90: Dichtlage
- 92: Haftvermittlungslage
- 94: Textile Verbindungslage
- 96: Grenzschicht
- 102: Diffusionsdichtes elastomeres Material der Dichtlage
- 104: Adhäsives elastomeres Material der Haftvermittlungslage
- A: Zeichnungsausschnitt

## Patentansprüche

1. Schichtaufbau (14) aus wenigstens einem elastomeren Material (82, 86, 102, 104) mit darin eingebetteten Fasern, beispielsweise für die Herstellung eines Luftfederbalgs (12) einer Luftfeder (10), mit mindestens zwei Gewebelagen (62, 64) und zwei Deckschichten (60, 66), bei dem die erste Gewebelage (62) mit der zweiten Gewebelage (64) sowie mit der Innenseite (76) der ersten Deckschicht (60) verbunden ist, und bei dem die zweite Gewebelage (64) mit der Innenseite (77) der zweiten Deckschicht (66) verbunden ist, wobei die erste Gewebelage (62) mit einem in ein elastomeres Material (82) eingebetteten ersten Traggewebe (80) und die zweite Gewebelage (64) mit einem in dasselbe elastomere Material (82) oder in ein anderes elastomeres Material (86) eingebetteten zweiten Traggewebe (84) gebildet ist, wobei die zweite Deckschicht (66) eine Dichtlage (90) sowie eine Haftvermittlungslage (92) aufweist, wobei die Dichtlage (90) aus einem weitestgehend diffusionsdichten elastomeren Material (102) und die Haftvermittlungslage (92) aus einem hochgradig adhäsiven sowie gut an der zweiten Gewebelage (64) haftenden elastomeren Material (104) gebildet ist, **dadurch gekennzeichnet, dass** zwischen Dichtlage (90) und Haftvermittlungslage (92) eine textile Verbindungslage (94) zur gegenseitigen mechanischen Verkrallung von Dichtlage (90) und Haftvermittlungslage (92) angeordnet ist.

2. Schichtaufbau nach Anspruch 1, **dadurch gekennzeichnet, dass** die textile Verbindungslage (94) als ein Mono-Gewebe oder als ein Bistretch-Gewebe ausgeführt ist.

3. Schichtaufbau nach Anspruch 1 oder 2, **dadurch gekennzeichnet, dass** die Dichtlage (90) mit oder ausschließlich aus einem Butyl-Elastomer gebildet ist.

4. Schichtaufbau nach Anspruch 1, 2 oder 3, **dadurch gekennzeichnet, dass** die Haftvermittlungslage (92) mit oder ausschließlich aus einem Chloropren-Elastomer gebildet ist.

5. Schichtaufbau nach einem der Ansprüche 1 bis 3, **dadurch gekennzeichnet, dass** die Haftvermittlungslage (92) mit oder ausschließlich aus einem Naturkautschuk-Elastomer und mit einem Butadien-Elastomer gebildet ist.

6. Schichtaufbau nach einem der Ansprüche 1 bis 3, **dadurch gekennzeichnet, dass** die Haftvermittlungslage (92) mit oder ausschließlich aus einem Ethylen-Propylen-Dien-Kautschuk (EPDM)-Elastomer gebildet ist.

7. Schichtaufbau nach einem der vorherigen Ansprüche, **dadurch gekennzeichnet, dass** die erste Deckschicht (60) eine Materialstärke von 0,8 mm bis 1,5 mm aufweist.

8. Schichtaufbau nach einem der vorherigen Ansprüche, **dadurch gekennzeichnet, dass** die zweite Deckschicht (66) eine Materialstärke von 1,0 mm bis 1,5 mm aufweist.

9. Schichtaufbau nach einem der vorherigen Ansprüche, **dadurch gekennzeichnet, dass** die beiden Traggewebe (80, 84) jeweils als gekreuzte Cordgewebe (88) ausgeführt sind.

10. Schichtaufbau nach einem der vorherigen Ansprüche, **dadurch gekennzeichnet, dass** die mindestens zwei Gewebelagen (62, 64) jeweils eine Materialstärke von 0,9 mm bis 1,2 mm aufweisen.

11. Schichtaufbau nach einem der vorherigen Ansprüche, **dadurch gekennzeichnet, dass** die erste Deckschicht (60) aus einem Chloropren-Elastomer (CR) oder einem Naturkautschuk-Elastomer (NR) oder einem Butadien-Elastomer (BR) oder einem Ethylen-Propylen-Dien-Kautschuk (EPDM)-Elastomer gebildet ist.

12. Luftfederbalg (12), dessen Wand (13) einen Schichtaufbau (14) aus wenigstens einem elastomeren Material (82, 86, 102, 104) mit darin eingebetteten Fasern sowie die Merkmale von wenigstens einem der Ansprüche 1 bis 11 aufweist.

13. Luftfeder (10) mit einem schlauchartigen Luftfederbalg (12), dessen Wand (13) einen Schichtaufbau (14) aus wenigstens einem elastomeren Material (82, 86, 102, 104) mit darin eingebetteten Fasern aufweist, **dadurch gekennzeichnet, dass** der Schichtaufbau (14) gemäß wenigstens einem der Ansprüche 1 bis 11 ausgebildet ist, wobei der die Wand (13) des Luftfederbalgs (12) bildende Schichtaufbau (14) des Luftfederbalgs (12) derartig orientiert ist, dass dessen erste Deckschicht (60) der äußeren Umgebung (32) des Luftfederbalgs (12) und dessen zweite Deckschicht (66) dem Innenraum (28) des Luftfederbalgs (12) zugewandt ist.

14. Verfahren zur Herstellung eines Schichtaufbaus (14) mit den Merkmalen von wenigstens einem der Ansprüche 1 bis 11, **dadurch gekennzeichnet, dass** der Schichtaufbau (14) in einer automatischen Matten-Vulkanisierungsvorrichtung erzeugt wird.

## Claims

1. Layer construction (14) composed of at least one elastomeric material (82, 86, 102, 104) having fibres embedded therein, for example for production of an air spring bellows (12) of an air spring (10), having at least two fabric plies (62, 64) and two top layers (60, 66) where the first fabric ply (62) is joined to the second fabric ply (64) and to the inside (76) of the first top layer (60) and where the second fabric ply (64) is joined to the inside (77) of the second top layer (66), wherein the first fabric ply (62) is formed with a first carrier fabric (80) embedded in an elastomeric material (82) and the second fabric ply (64) is formed with a second carrier fabric (84) embedded in the same elastomeric material (82) or in another elastomeric material (86), wherein the second top layer (66) comprises a sealing ply (90) and an adhesion promoter ply (92), wherein the sealing ply (90) is formed from a very largely diffusion-tight elastomeric material (102) and the adhesion promoter ply (92) is formed from a highly adhesive elastomeric material (104) which is strongly adherent to the second fabric ply (64), **characterized in that** a textile joining ply (94) for reciprocal mechanical interlocking of the sealing ply (90) and the adhesion promoter ply (92) is arranged between the sealing ply (90) and the adhesion promoter ply (92).

2. Layer construction according to Claim 1, **characterized in that** the textile joining ply (94) is in the form of a mono-fabric or in the form of a bi-stretch fabric.

3. Layer construction according to Claim 1 or 2, **characterized in that** the sealing ply (90) is formed with or exclusively from a butyl elastomer.

4. Layer construction according to Claim 1, 2 or 3, **characterized in that** the adhesion promoter ply (92) is formed with or exclusively from a chloroprene elastomer.

5. Layer construction according to any of Claims 1 to 3, **characterized in that** the adhesion promoter ply (92) is formed with or exclusively from a natural rubber elastomer and with a butadiene elastomer.

6. Layer construction according to any of Claims 1 to 3, **characterized in that** the adhesion promoter ply (92) is formed with or exclusively from an ethylenepropylene-diene rubber (EPDM) elastomer.

7. Layer construction according to any of the preceding claims, **characterized in that** the first top layer (60) has a thickness of 0.8 mm to 1.5 mm.

8. Layer construction according to any of the preceding claims, **characterized in that** the second top layer (66) has a thickness of 1.0 mm to 1.5 mm.

9. Layer construction according to any of the preceding claims, **characterized in that** the two carrier fabrics (80, 84) are each in the form of crossed corduroy fabrics (88).

10. Layer construction according to any of the preceding claims, **characterized in that** the at least two fabric plies (62, 64) each have a thickness of 0.9 mm to 1.2 mm.

11. Layer construction according to any of the preceding claims, **characterized in that** the first top layer (60) is formed from a chloroprene elastomer (CR) or a natural rubber elastomer (NR) or a butadiene elastomer (BR) or an ethylenepropylene-diene rubber (EPDM) elastomer.

12. Air spring bellows (12) whose wall (13) comprises a layer construction (14) composed of at least one elastomeric material (82, 86, 102, 104) having fibres embedded therein and the features of at least one of Claims 1 to 11.

13. Air spring (10) comprising a hose-like air spring bellows (12) whose wall (13) comprises a layer construction (14) composed of at least one elastomeric material (82, 86, 102, 104) having fibres embedded therein, **characterized in that** that the layer construction (14) is configured according to at least one of Claims 1 to 11, wherein the layer construction (14) of the air spring bellows (12) forming the wall (13) of the air spring bellows (12) is oriented such that its first top layer (60) faces the external environment (32) of the air spring bellows (12) and its second top layer (66) faces the interior (28) of the air spring bellows (12).

14. Process for producing a layer construction (14) having the features of at least one of Claims 1 to 11, **characterized in that** the layer construction (14) is generated in an automatic mat vulcanization device.

## Revendications

1. Structure stratifiée (14) composée d'au moins un matériau élastomère (82, 86, 102, 104) dans lequel sont incorporées des fibres, par exemple pour la fabrication d'un soufflet de ressort pneumatique (12) d'un ressort pneumatique (10), avec au moins deux couches de tissu (62, 64) et deux couches de recouvrement (60, 66), dans laquelle la première couche de tissu (62) est reliée à la deuxième couche de tissu (64) ainsi qu'au côté intérieur (76) de la première couche de recouvrement (60), et dans laquelle la deuxième couche de tissu (64) est reliée au côté intérieur (77) de la deuxième couche de recouvrement (66), la première couche de tissu (62) étant formée avec un premier tissu porteur (80) incorporé dans un matériau élastomère (82) et la deuxième couche de tissu (64) étant formée avec un deuxième tissu porteur (84) incorporé dans le même matériau élastomère (82) ou dans un autre matériau élastomère (86), la deuxième couche de recouvrement (66) présentant une couche d'étanchéité (90) ainsi qu'une couche de promoteur d'adhésion (92), la couche d'étanchéité (90) étant formée d'un matériau élastomère (102) largement étanche à la diffusion et la couche de promoteur d'adhésion (92) étant formée d'un matériau élastomère (104) hautement adhésif et adhérant bien à la deuxième couche de tissu (64), **caractérisée en ce qu'**entre la couche d'étanchéité (90) et la couche de promoteur d'adhésion (92) est agencée une couche de liaison textile (94) pour l'accrochage mécanique mutuel de la couche d'étanchéité (90) et de la couche de promoteur d'adhésion (92).

2. Structure stratifiée selon la revendication 1, **caractérisée en ce que** la couche de liaison textile (94) est réalisée sous la forme d'un tissu mono ou sous la forme d'un tissu bistretch.

3. Structure stratifiée selon la revendication 1 ou 2, **caractérisée en ce que** la couche d'étanchéité (90) est formée avec ou exclusivement d'un élastomère de butyle.

4. Structure stratifiée selon la revendication 1, 2 ou 3, **caractérisée en ce que** la couche de promoteur d'adhésion (92) est formée avec ou exclusivement d'un élastomère de chloroprène.

5. Structure stratifiée selon l'une quelconque des revendications 1 à 3, **caractérisée en ce que** la couche de promoteur d'adhésion (92) est formée avec ou exclusivement d'un élastomère de caoutchouc naturel et avec un élastomère de butadiène.

6. Structure stratifiée selon l'une quelconque des revendications 1 à 3, **caractérisée en ce que** la couche de promoteur d'adhésion (92) est formée avec ou exclusivement d'un élastomère de caoutchouc éthylène-propylène-diène (EPDM).

7. Structure stratifiée selon l'une quelconque des revendications précédentes, **caractérisée en ce que** la première couche de recouvrement (60) présente une épaisseur de matériau de 0,8 mm à 1,5 mm.

8. Structure stratifiée selon l'une quelconque des revendications précédentes, **caractérisée en ce que** la deuxième couche de recouvrement (66) présente une épaisseur de matériau de 1,0 mm à 1,5 mm.

9. Structure stratifiée selon l'une quelconque des revendications précédentes, **caractérisée en ce que** les deux tissus porteurs (80, 84) sont respectivement réalisés sous forme de tissus câblés croisés (88).

10. Structure stratifiée selon l'une quelconque des revendications précédentes, **caractérisée en ce que** les au moins deux couches de tissu (62, 64) présentent chacune une épaisseur de matériau de 0,9 mm à 1,2 mm.

11. Structure stratifiée selon l'une quelconque des revendications précédentes, **caractérisée en ce que** la première couche de recouvrement (60) est formée d'un élastomère de chloroprène (CR) ou d'un élastomère de caoutchouc naturel (NR) ou d'un élastomère de butadiène (BR) ou d'un élastomère de caoutchouc éthylène-propylène-diène (EPDM).

12. Soufflet de ressort pneumatique (12), dont la paroi (13) présente une structure stratifiée (14) composée d'au moins un matériau élastomère (82, 86, 102, 104) dans lequel sont incorporées des fibres, ainsi que les caractéristiques d'au moins l'une quelconque des revendications 1 à 11.

13. Ressort pneumatique (10) avec un soufflet de ressort pneumatique (12) en forme de tuyau, dont la paroi (13) présente une structure stratifiée (14) composée d'au moins un matériau élastomère (82, 86, 102, 104) dans lequel sont incorporées des fibres, **caractérisé en ce que** la structure stratifiée (14) est configurée selon au moins l'une quelconque des revendications 1 à 11, la structure stratifiée (14) du soufflet de ressort pneumatique (12) formant la paroi (13) du soufflet de ressort pneumatique (12) étant orientée de telle sorte que sa première couche de recouvrement (60) est tournée vers l'environnement extérieur (32) du soufflet de ressort pneumatique (12) et sa deuxième couche de recouvrement (66) vers l'espace intérieur (28) du soufflet de ressort pneumatique (12).

14. Procédé de fabrication d'une structure stratifiée (14) avec les caractéristiques d'au moins l'une quelconque des revendications 1 à 11, **caractérisé en ce que** la structure stratifiée (14) est générée dans un dispositif de vulcanisation automatique de mats.
